# EUROPÄISCHE PATENTANMELDUNG

(11) **EP 4 549 092 A1**
(43) Veröffentlichungstag der Anmeldung: **07.05.2025**
(21) Anmeldenummer: 23208025.9
(22) Anmeldetag: 06.11.2023
(51) Int. Cl.: B25B 1/24, B23Q 3/00, B25B 5/16

(54) **SPANNBACKE UND SPANNBACKENSYSTEM**

(71) Anmelder: Hainbuch GmbH Spannende Technik, 71672 Marbach (DE)
(72) Erfinder: Fried, Roland, 71711 Murr (DE)
(74) Vertreter: Witte, Weller und Partner Patentanwälte mbB Stuttgart

(57) **Zusammenfassung**

Die Erfindung betrifft eine Spannbacke (10) und ein Spannbackensystem (100) zum Spannen eines Werkstücks. Die Spannbacke (10) weist eine Grundbacke (20) und eine Aufsatzbacke (70) auf. Zum Zwecke der Zustellung und dem Spannen eines Werkstücks wird die Spannbacke als Ganzes in einer Zustellrichtung verlagert.

Die Grundbacke (20) weist auf einer Oberseite (26) eine Kontaktfläche (30) auf. Die Aufsatzbacke (70) weist an einer Unterseite (76) eine korrespondierende Kontaktfläche (80) zur Anlage an der Oberseite (26) der Grundbacke (20) auf.

Zur Arretierung der Aufsatzbacke (70) an der Grundbacke (20) weist die Aufsatzbacke (70) an ihrer Unterseite (76) eine Arretierungsausnehmung (86) auf. Die Grundbacke (20) weist einen Aufnahmeraum (36) und einen innerhalb des Aufnahmeraums beweglichen Arretierungskörper (40) auf, der zwischen einer Freigabestellung und einer Arretierstellung beweglich im Aufnahmeraum (36) aufgenommen ist, wobei der Arretierungskörper (40) bei aufgesetzter Aufsatzbacke (70) in der Arretierstellung in die Arretierungsausnehmung (86) eingerückt ist. In der Grundbacke (20) ist eine Steuerwelle (60) gelagert, an der drehstarr mindestens ein Exzenterbereich (62) vorgesehen ist. Bei einer Drehbewegung der Steuerwelle (60) wirkt der Exzenterbereich (62) auf den Arretierungskörper (40) und drückt diesen in der Arretierungsausnehmung (86), so dass die Aufsatzbacke (70) hierdurch gegen Trennung von der Grundbacke (20) gesichert ist.

## Beschreibung

### ANWENDUNGSGEBIET UND STAND DER TECHNIK

Die Erfindung betrifft ein Spannbackensystem zum Einspannen eines Werkstücks zum Zwecke der Bearbeitung sowie eine Spannbacke hierfür.

Gattungsgemäße Spannbackensysteme weisen eine Mehrzahl von Spannbacken auf, die zum Zwecke des Spannens und Entspannens von Werkstücken relativ zueinander verfahrbar sind, wobei diese Spannbacken sich jeweils aus einer Grundbacke und einer hieran zu befestigenden Aufsatzbacke zusammensetzen. Die Austauschbarkeit der Aufsatzbacke gestattet es, jeweils für das Werkstück angepasste Aufsatzbacken zu verwenden, also beispielsweise Aufsatzbacken, die eine für das jeweilige Werkstück optimale Spannfläche aufweisen, oder spezifische Aufsatzbacken für die Verwendung als Innenspannmittel oder Außenspannmittel.

Im Produktionsprozess sind Wechsel der Aufsatzbacken regelmäßig erforderlich. Bekannte Spannbacken sind hinsichtlich der Einfachheit und Sicherheit dieses Wechsels noch nicht ideal. Insbesondere, wenn der Bedarf besteht, den Wechsel der Aufsatzbacke wahlweise manuell oder automatisiert durchzuführen, sind bestehende Systeme noch verbesserungsbedürftig.

### AUFGABE UND LÖSUNG

Aufgabe der Erfindung ist es, ein Spannbackensystem sowie Spannbacken hierfür zur Verfügung zu stellen, das einen einfachen Wechsel der Aufsatzbacken gestattet.

Hierfür wird primär eine Spannbacke sowie sekundär ein Spannbackensystem mit einer solchen Spannbacke vorgeschlagen, bei dem die folgende Gestaltung realisiert ist.

In gattungsüblicher Art weist eine erfindungsgemäße Spannbacke eine Grundbacke und eine hierauf in einer Kopplungsrichtung aufsetzbare Aufsatzbacke auf. Gemeinsam bilden die Grundbacke und die Aufsatzbacke eine im Betrieb in sich unbewegliche Spannbacke, die als Ganzes gegenüber einem Spannfutter verlagert wird, um ein Werkstück zu spannen bzw. zu entspannen.

Die eigentliche Einleitung einer Spannkraft in das Werkstück erfolgt zumindest primär über die Aufsatzbacke. Diese weist zu diesem Zweck eine Spannfläche zur Anlage an einem Werkstück auf.

Zur Koppelung von Aufsatzbacke mit der Grundbacke ist an einer Oberseite der Grundbacke eine Kontaktfläche vorgesehen. Der Begriff "Oberseite" ist ebenso wie der Begriff "Unterseite" im Kontext dieser Beschreibung dabei nicht dahingehend zu verstehen, dass diese Seiten im Betrieb nach oben bzw. unten weisen. Die Oberseite ist vielmehr dadurch definiert, dass sie in Richtung derAufsatzbacke gerichtet ist und die Hauptkontaktfläche zur Anlage der Aufsatzbacke zur Verfügung stellt. Entsprechend beschreibt der Begriff der "Unterseite" die in Richtung der Grundbacke weisende Seite der Aufsatzbacke.

Die Aufsatzbacke weist korrespondierend zur Oberseite der Grundbacke und der dortigen Kontaktfläche an der Unterseite eine Kontaktfläche zur flächigen Anlage an der Oberseite der Grundbacke auf. Bei aufgesetzter und festgelegter Aufsatzbacke liegen die Aufsatzbacke und die Grundbacke im Bereich der genannten Kontaktflächen aneinander an. Die Kontaktflächen erstrecken sich vorzugsweise in jener Ebene, die durch die Zustellrichtungen der Spannbacken des Spannbackensystems aufgespannt wird.

Zur Arretierung der Aufsatzbacke an der Grundbacke weist die Aufsatzbacke an ihrer Unterseite eine Arretierungsausnehmung auf, die durch eine Vertiefung quer zur Kopplungsrichtung gebildet wird. Die Grundbacke ist dafür vorgesehen, mittels dieser Arretierungsausnehmung eine Verriegelung der Aufsatzbacke zu ermöglichen. Hierfür weist die Grundbacke einen Arretierungskörper auf, der in einem Aufnahmeraum der Grundbacke beweglich angeordnet ist. Der Arretierungskörper ist innerhalb des Aufnahmeraums zwischen einer Freigabestellung und einer Arretierstellung verlagerbar. Befindetsich der Arretierungskörper bei aufgesetzter Aufsatzbacke in der Arretierstellung, so ragt er zumindest teilweise in die Arretierungsausnehmung der Aufsatzbacke hinein und steht damit einer Trennung der Aufsatzbacke von der Grundbacke entgegen, sofern er in dieser Position arretiert ist.

Um diese Arretierung des Arretierungskörpers in der Arretierstellung zu bewirken und um zu verhindern, dass die Aufsatzbacke in ungewollter Weise bei gleichzeitiger Auslenkung des Arretierungskörpers in Richtung der Freigabestellung von der Grundbacke getrennt wird, ist gemäß der Erfindung vorgesehen, dass in der Grundbacke eine Steuerwelle drehbar gelagert ist. An der Steuerwelle ist drehstarr mindestens ein Exzenterbereich vorgesehen, also ein von der Rotationssymmetrie der Steuerwelle abweichender Bereich. Insbesondere kann der Exzenterbereich dadurch gebildet sein, dass eine umlaufende Ringfläche vorgesehen ist, deren Mittelachse vorzugsweise gegenüber der Drehachse der Steuerwelle versetzt ist.

Bei der Steuerwelle kann es sich insbesondere um eine einstückige metallische Steuerwelle handeln, an der die Exzenterbereiche unmittelbar vorgesehen sind. Möglich ist aber auch eine mehrteilige Gestaltung, bei der beispielsweise ein Exzenterring an einer rotationssymmetrischen Steuerwelle angebracht ist.

Bei einer Drehbewegung der Steuerwelle dreht der Exzenterbereich mit und wirkt mittelbar oder unmittelbar auf den Arretierungskörper. Der Exzenterbereich drückt den Arretierungskörper in die Arretierstellung in der Arretierungsausnehmung bzw. ermöglicht bei fortgesetzter oder entgegengesetzter Drehbewegung wieder die Verlagerung des Arretierungskörpers in Richtung der Freigabestellung, so dass dieser aus der Arretierungsausnehmung entweichen kann.

Wenn der Arretierungskörper mittels der Steuerwelle in der Ausnehmung gesichert ist, ist ein Abnehmen der Aufsatzbacke nicht möglich. Der Exzenter hat eine selbsthemmende Wirkung. Es ist demnach nicht möglich, durch starke Kraftbeaufschlagung der Aufsatzbacke in einer Trennrichtung die Steuerwelle zu verdrehen.

Vorzugsweise weist die Grundbacke an ihrer Oberseite einen Aufnahmeschacht auf. Dieser Aufnahmeschacht bildet eine Vertiefung, die an Seitenflächen der Grundbacke offen sein kann oder alternativ nur an der Oberseite der Grundbacke aus offen ist. Der Aufnahmeraum, in dem der Arretierungskörper beweglich angeordnet ist, grenzt an diesen Aufnahmeschacht an. Der Arretierungskörper kann daher zumindest teilweise in den Aufnahmeschacht einrücken. Vorzugsweise sind der Aufnahmeschacht und der Aufnahmeraum des Arretierungskörpers durch eine Verengung voneinander getrennt, durch die der Arretierungskörper als Ganzes nicht hindurchpasst.

Korrespondierend zum Aufnahmeschacht ist an der Aufsatzbacke vorzugsweise ein Kopplungsfortsatz vorgesehen, der bei aufgesetzter Aufsatzbacke im Aufnahmeschacht der Grundbacke angeordnet ist. Die Arretierungsausnehmung ist an diesem Kopplungsfortsatz angeordnet, so dass der Arretierungskörper aus dem Aufnahmeraum in die Arretierungsausnehmung gedrückt werden kann und hierdurch die Aufsatzbacke sichert, wenn die Bewegung des Arretierungskörpers in Richtung seiner Freigabestellung blockiert ist.

Der Aufnahmeschacht und der Kopplungsfortsatz definieren durch ihre Formgebung die Kopplungsrichtung von Aufsatzbacke und Grundbacke. Diese Kopplungsrichtung kann orthogonal zu den Hauptkontaktfläche an der Oberseite der Grundbacke und der Unterseite der Aufsatzbacke und/oder orthogonal zur Zustellrichtung ausgerichtet sein. Vorzugsweise jedoch beträgt der Winkel zwischen der Zustellrichtung und der Kopplungsrichtung nicht 90°. Insbesondere vorzugsweise beträgt der Winkel zwischen 60° und 85°.

Insbesondere ist dies von Vorteil, wenn der Aufnahmeschacht derart gegenüber der Zustellrichtung schräggestellt ist, dass eine Anlagefläche innerhalb des Schachtes mit der Kontaktfläche an der Oberseite der Grundbacke ebenfalls einen Winkel ungleich 90° einschließt, vorzugweise einen Winkel zwischen 60° und 85°. Die Anlagefläche schließt in einem solchen Fall mit der Kontaktfläche einen spitzen Winkel ein. Wird die Aufsatzbacke durch die vom Werkstück auf die Spannfläche der Aufsatzbacke wirkende Kraft gegen diese Anlagefläche gedrückt, sie wird die Aufsatzbacke hierdurch aufgrund der Schrägstellung auch gegen die Kontaktfläche der Grundbacke und damit in die Sollposition gepresst. Dies erleichtert den Wechsel, da die Sollposition der Aufsatzbacke an der Grundbacke einfach zu erzielen ist.

Vorzugsweise ist der Aufnahmeraum des Arretierungskörpers gegenüberliegend der Anlagefläche im Aufnahmeschacht vorgesehen, so dass auch die über den Arretierungskörper in die Aufsatzbacke eingeleitete Kraft die Aufsatzbacke in die Sollposition drückt. Die genannte schräggestellte Anlagefläche gewährleistet dementsprechend beim Arretieren der Aufsatzbacke und im Betrieb die einwandfreie Positionierung der Aufsatzbacke.

Die Drehachse der Steuerwelle erstreckt sich vorzugsweise parallel zur Zustellrichtung der Spannbacke. Hierdurch wird es möglich, die Handhabung der Steuerwelle von einer Außenseite der Spannbacke aus zu bewirken. Dies ist sowohl bei der manuellen Handhabung als auch bei der automatisierten Handhabung vorteilhaft, da die Außenseite der Spannbacke besonders gut zugänglich ist.

Vorzugsweise weist die Steuerwelle an einem nach außen weisenden Stirnende eine unrunde Betätigungsstruktur auf, insbesondere in Form eines Vierkants oder eines Sechskants. Über diese Betätigungsstruktur kann die Steuerwelle gedreht werden und der arretierte und freigegebene Zustand der Aufsatzbacke ist hierüber herstellbar.

Die Steuerwelle kann mittels des Exzenterbereichs unmittelbar oder mittelbar auf den Arretierungskörper wirken. Bei einer unmittelbaren Wirkung ist vorgesehen, dass der Arretierungskörper selbst in unmittelbarem Kontakt mit dem Exzenter steht.

Um die Steuerwelle vom Aufnahmeraum des Arretierungsgliedes beabstanden zu können, wird allerdings die mittelbare Wirkung der Steuerwelle auf den Arretierungskörper bevorzugt. In einem solchen Fall verfügt die Grundbacke über ein Zwischenglied, welches am Exzenterbereich der Steuerwelle anliegt und daher mittels der Steuerwelle verlagert und insbesondere linear verschoben werden kann. Insbesondere vorzugsweise schließt die Drehachse der Steuerwelle mit einer Verschieberichtung des Zwischengliedes einen Winkel von 90° ein.

Das gegenüberliegende Ende des Zwischengliedes liegt zumindest phasenweise am Arretierungskörper an. Vorzugsweise ist hierfür am Zwischenglied eine schräggestellte Kontaktfläche vorgesehen, an der der Arretierungskörper anliegt und an der der Arretierungskörper bei Verlagerung des Zwischengliedes abgleitet oder abrollt. Über den Exzenterbereich und das Zwischenglied führt die Drehbewegung der Steuerwelle dazu, dass der Arretierungskörper in die Arretierungsstellung und damit in die Arretierungsausnehmung der Aufsatzbacke gedrückt wird und somit die Aufsatzbacke sichert.

Der Arretierungskörper selbst kann ein verschiebbarer Stift sein oder eine anderweitiger Formgebung aufweisen, die eine vollständig definierte Ausrichtung aufweist. Bevorzugt ist allerdings die Verwendung eines Rollkörpers als Arretierungskörper. Insbesondere vorzugsweise weist der Arretierungskörpereine zumindest abschnittsweise kreiszylindrische Formgebung auf. Die Mittelachse des Arretierungskörpers ist vorzugsweise orthogonal zur Kopplungsrichtung ausgerichtet.

Die Ausgestaltung des Arretierungskörpers als Rollkörper erleichtert die Verlagerbarkeit mittels des Exzenterbereichs oder des Zwischengliedes. Zudem wird auch die Montage des Arretierungskörpers in den Aufnahmeraum erleichtert.

Eine dem Arretierungskörper zugewandte Stirnfläche des Zwischengliedes ist vorzugsweise versetzt zur Mittelachse des Arretierungskörper ausgerichtet, so dass bei einer Verlagerung des Zwischengliedes mittels der Steuerwelle des Arretierungskörpers in Richtung der Arretierungsausnehmung der Aufsatzbacke gedrückt wird.

Vorzugsweise sind der Exzenterbereich bzw. das Zwischenglied nicht die einzigen Elemente, die den Arretierungskörper kraftbeaufschlagen. Bevorzugt ist eine Gestaltung mit mindestens einer Federeinrichtung, mittels derer der Arretierungskörper in Richtung der Arretierstellung gedrückt wird. Die Federkraft dieser Federeinrichtung bewirkt, dass die Aufsatzbacke auch nach Lösen der Arretierung über die Steuerwelle in Position gehalten wird. Die Aufsatzbacke ist dennoch gegen die Federkraft manuell oder automatisch entnehmbar.

Vorzugsweise ist die Spannbacke derart ausgebildet, dass ein Aufsetzen einer Aufsatzbacke auf die Grundbacke in zwei unterschiedlichen Orientierungen erfolgen kann. In Abhängigkeit der Ausrichtung der Aufsatzbacke kann das Spannsystem als Innenspannmittel oder Außenspannmittel verwendet werden. Es kann vorgesehen sein, dass dieselbe Aufsatzbacke in unterschiedlichen Orientierungen auf der Grundbacke aufsetzbar ist.

Zur Ermöglichung des Aufsetzens und Arretierens von Aufsatzbacken in zwei unterschiedlichen Ausrichtungen sind vorzugsweise einige der Komponenten der Grundbacke zweifach vorgesehen. Insbesondere weist die Grundbacke vorzugsweise zwei Arretierungskörper auf, die jeweils in einem Aufnahmeraum angeordnet sind und zum Zwecke der Arretierung verlagerbar sind. Vorzugsweise ist vorgesehen, dass die zwei Arretierungskörper durch eine gemeinsame Steuerwelle verlagerbar sind. Insbesondere vorzugsweise führt eine Drehbewegung der Steuerwelle dazu, dass die Arretierungskörper in entgegengesetzte Richtung verlagert werden.

Die Grundbacke weist weiterhin vorzugsweise an ihrer Oberseite zwei Aufnahmeschächte für den Kopplungsfortsatz der Aufsatzbacke auf. Diese Aufnahmeschächte definieren vorzugsweise voneinander abweichende Kopplungsrichtungen. Die genannten zwei Arretierungskörper sind jeweils in sich an die Aufnahmeschächte angrenzenden Aufnahmeräume angeordnet.

Neben der Spannbacke selbst betrifft die Erfindung auch ein Spannbackensystem zum Einspannen von Werkstücken. Dieses Spannbackensystem weist einen Futterkörper auf, gegenüber dem eine Mehrzahl von Spannbacken der beschriebenen Art zustellbar sind. Insbesondere vorzugsweise handelt es sich um mindestens zwei, drei oder vier solcher Spannbacken, die gegenüber einer Hauptachse des Spannfutters radial verlagerbar sind.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Spannbackensystem in einer Frontalansicht.
Fig. 2 zeigt eine Spannbacke des Spannbackensystems der Fig. 1 in perspektivischer Darstellung.
Die Fig. 3A und 3B zeigen die Spannbacke gemäß Fig. 2 in Seitenansichten in zwei unterschiedlichen Konfigurationen, nämlich als Innenspannbacke und als Außenspannbacke.

Fig. 4A und 4B zeigen eine Grundbacke der Spannbacke in zwei unterschiedlichen perspektivischen Ansichten.
Fig. 5 zeigt die Unterseite einer Aufsatzbacke.
Fig. 6 zeigt die Grundbacke in geschnittener Ansicht.
Fig. 7 zeigt eine Steuerwelle der Grundbacke in separater Darstellung.

### DETAILLIERTE BESCHREIBUNG DER AUSFÜHRUNGSBEISPIELE

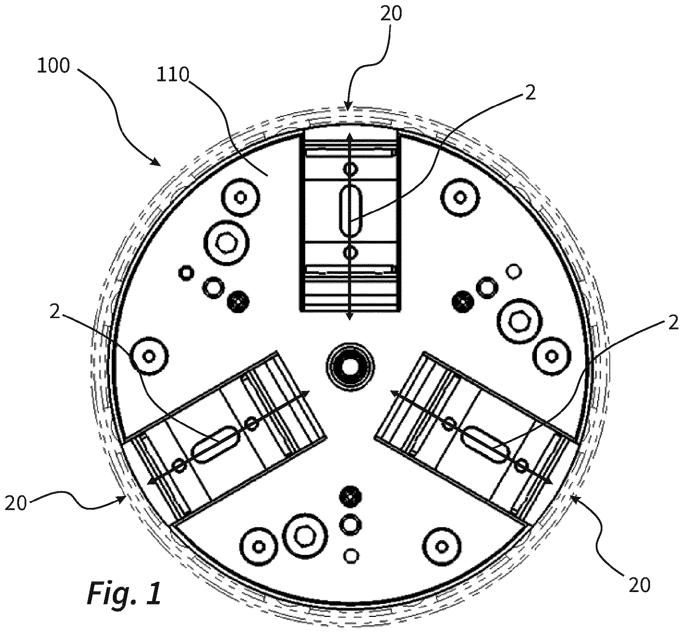

Fig. 1 zeigt ein Spannbackensystem 100 umfassend einen Futterkörper 110 sowie drei radial zu einer Mittelachse des Spannbackensystems 100 ausgerichtete Spannbacken 10, von denen in Fig. 1 nur die jeweilige Grundbacke 20 zu sehen ist. Das Spannbackensystem 100 kann Teil einer Drehmaschine sein und dem Zweck dienen, Werkstücke für die rotative spanende Bearbeitung einzuspannen.

Die Spannbacken 10 des Spannbackensystems 100 sind als zusammengesetzte Spannbacken 10 mit einer Grundbacke 20 und einer Aufsatzbacke 70 ausgebildet.

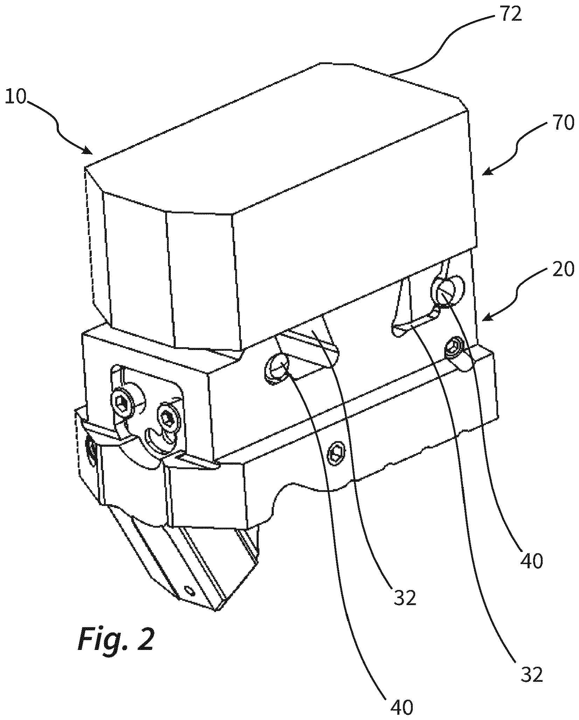

In Fig. 2 ist eine Spannbacke 10 in ihrer Gesamtheit dargestellt. Die Spannbacke 10 besteht aus den bereits genannten Komponenten der Grundbacke 20 und der Aufsatzbacke 70. Die Grundbacke 20 wird bestimmungsgemäß mit ihrer Unterseite verschiebbar am Futterkörper 110 angebracht. An der Oberseite 26 der Grundbacke 20 und der Unterseite 76 der Aufsatzbacke 70 ist ein Kopplungs- und Arretierungsmechanismus vorgesehen, der im Weiteren noch erläutert wird.

Auf der Grundbacke 20 ist die Aufsatzbacke 70 mittels des genannten Kopplungs- und Arretierungsmechanismus befestigt. Die Aufsatzbacke 70 stellt die eigentliche Spannfläche 72 zur Verfügung, wobei diese Spannfläche 72je nach Art der Aufsatzbacke bzw. ihrer Orientierung bei Anbringung an der Grundbacke 20 radial nach außen oder radial nach innen gerichtet sein kann. Im Falle der Fig. 2 ist die Spannfläche 72 radial nach außen gerichtet.

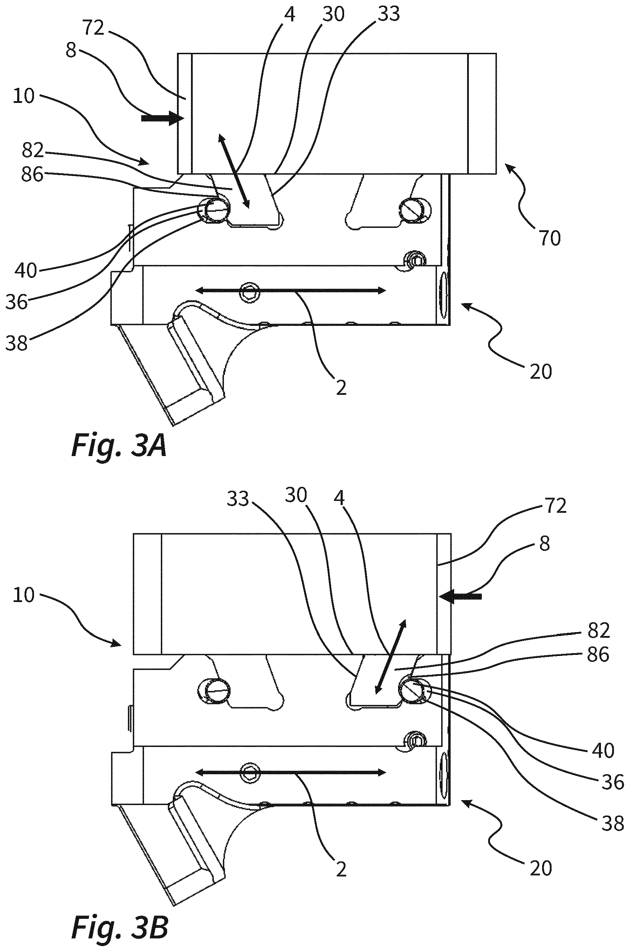

Die Fig. 3A und 3B verdeutlichen den Kopplungs- und Arretierungsmechanismus und dessen Verwendung zur Arretierung der Aufsatzbacke in ihrer Funktion als Außenspannbacke (Fig. 3A) und als Innenspannbacke (Fig. 3B).

Die Hauptkontaktflächen 30, 80 der Grundbacke 20 und der Aufsatzbacke 70 sind an deren Oberseite 26 bzw. Unterseite 76 vorgesehen. Wie auch aus den Fig. 3A und 3B ersichtlich ist, liegen die Grundbacke 20 und die Aufsatzbacke 70 hier flächig aneinander an.

In der Kontaktfläche 30 der Grundbacke 20 sind zwei Aufnahmeschächte 32 vorgesehen, die sich bis zu den Seitenflächen 28 der Grundbacke 20 erstrecken und somit auch von der Seite zugänglich sind. Korrespondierend mit diesen Aufnahmeschächten 32 weist die Aufsatzbacke 70 an ihrer Unterseite einen Kopplungsfortsatz 82 auf, der sich bei montierter Aufsatzbacke 70 in den Aufnahmeschacht 32 erstreckt.

Die beiden Aufnahmeschächte 32 dienen der Aufnahme des Kopplungsfortsatzes 82 in Abhängigkeit der Orientierung, in der die Aufsatzbacke 70 angebracht wird. Die Aufsatzbacke 70 kann derart ausgebildet sein, dass sie ohne weitere Änderungen in beiden Orientierungen mit der Grundbacke 20 gekoppelt werden kann. Alternativ können auch unterschiedliche Aufsatzbacken vorgesehen sein, die jeweils nur in einer Orientierung gekoppelt werden können.

Dient die Aufsatzbacke 70 des Ausführungsbeispiels dem Spannen des Werkstücks von außen, so wird sie entsprechend der Fig. 3A angebracht. Der Kopplungsfortsatz 82 ist im linken und bezogen auf das Spannsystem innenliegenden Aufnahmeschacht 32 der Grundbacke 20 aufgenommen. Dient die Aufsatzbacke 70 dem Spannen des Werkstücks von innen, so wird sie entsprechend der Fig. 3B angebracht. Der Kopplungsfortsatz 82 ist dann im rechten und bezogen auf das Spannsystem außenliegenden Aufnahmeschacht 32 der Grundbacke 20 aufgenommen.

Wie anhand der Fig. 3A und 3B zu ersehen ist, sind die Aufnahmeschächte 32 und der Kopplungsfortsatz 82 nicht orthogonal zur Zustellrichtung 2 ausgerichtet, sondern demgegenüber leicht angestellt. Die jeweiligen Kopplungs-/Entkopplungsrichtung 4 schließt mit der Zustellrichtung vorliegend einen Winkel von etwa 70° ein.

Diese Schrägstellung führt dazu, dass die vom innenseitig der Spannbacke 10 angeordneten Werkstück im Falle der Fig. 3A und die vom außenseitig der Spannbacke 10 angeordneten Werkstück im Falle der Fig. 3B über die Spannfläche 72 auf die Aufsatzbacke 70 wirkende Kraft 8 den Kopplungsfortsatz 82 gegen eine schräggestellte Anlagefläche 33 des Aufnahmeschachtes 32 drückt und somit die Aufsatzbacke 70 in ihre Sollage drückt, in der die Kontaktflächen 30, 80 der Grundbacke 20 und der Aufsatzbacke 70 plan aneinander anliegen.

Weiterhin ist in den Fig. 3A und 3B zu ersehen, dass sich an die beiden Aufnahmeschächte 32 jeweils ein Aufnahmeraum 36 zur Aufnahme eines zylindrischen Arretierungskörpers 40 anschließt. Die Aufnahmeschächte 32 und die Aufnahmeräume 36 sind miteinander verbunden, wobei ein verbindender Spalt eine lichte Weite aufweist, die geringer als der Durchmesser der Arretierungskörper 40 ist. Die Arretierungskörper 40 können daher zwar in den Aufnahmeschacht 32 hineinragen, jedoch nicht vollständig in den Aufnahmeschacht 32 entweichen.

Beide Arretierungskörper 40 sind jeweils federkraftbeaufschlagt. Hierfür sind Federeinrichtungen 38, beispielsweise mit einer Schraubenfeder, in Bohrungen aufgenommen, die in die Aufnahmeräume 36 münden. Die Arretierungskörper 40 werden hierdurch in ihre zum jeweiligen Aufnahmeschacht 32 gerichtete Endlage gedrückt, in der sie partiell in den Aufnahmeschacht 32 hineinragen.

Der Kopplungsfortsatz 82 der Aufsatzbacke 70 weist an seiner zum Aufnahmeraum 36 hin weisenden Seite eine Vertiefung auf, die sich quer zur Kopplungsrichtung 4 erstreckt und eine Arretierungsausnehmung 86 darstellt. Wenn sich der Arretierungskörper 40 in der genannten Endlage befindet, so ragt er in diese Arretierungsausnehmung 86 hinein. Sofern die nachfolgend erläuterte Arretierung nicht hergestellt wurde, kann die Aufsatzbacke 70 jedoch dennoch abgenommen werden, wobei hierfür mittelbar der Arretierungskörper 40 gegen die Kraft der Federeinrichtung38 ausgelenkt wird.

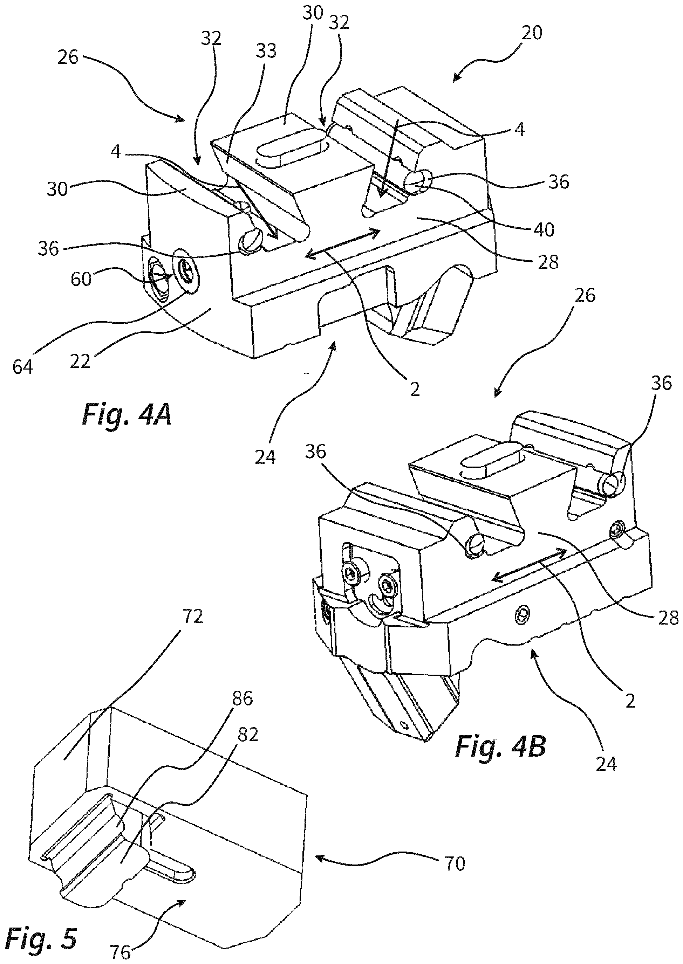

Zum Zwecke der Sicherung des jeweiligen Arretierungskörpers 40 in der Arretierstellung, durch die Entnahme der Aufsatzbacke 70 unterbunden ist, weist die Grundbacke 20 eine Steuerwelle 60 auf, die sich beim vorliegenden Ausführungsbeispiel parallel zur Zustellrichtung 2 durch den Körper der Grundbacke 20 erstreckt. An der Außenseite der Spannbacke 10 ist die Steuerwelle 60 von außen zugänglich und weist hiereine Betätigungsstruktur64, vorliegend in Form eines Sechskants, auf, wie in Fig. 4A ersichtlich ist. Am gegenüberliegenden innere Ende der Spannbacke 10 ist ein Halteblech vorgesehen, um die Steuerwelle 60 im Körper der Grundbacke 20 zu sichern.

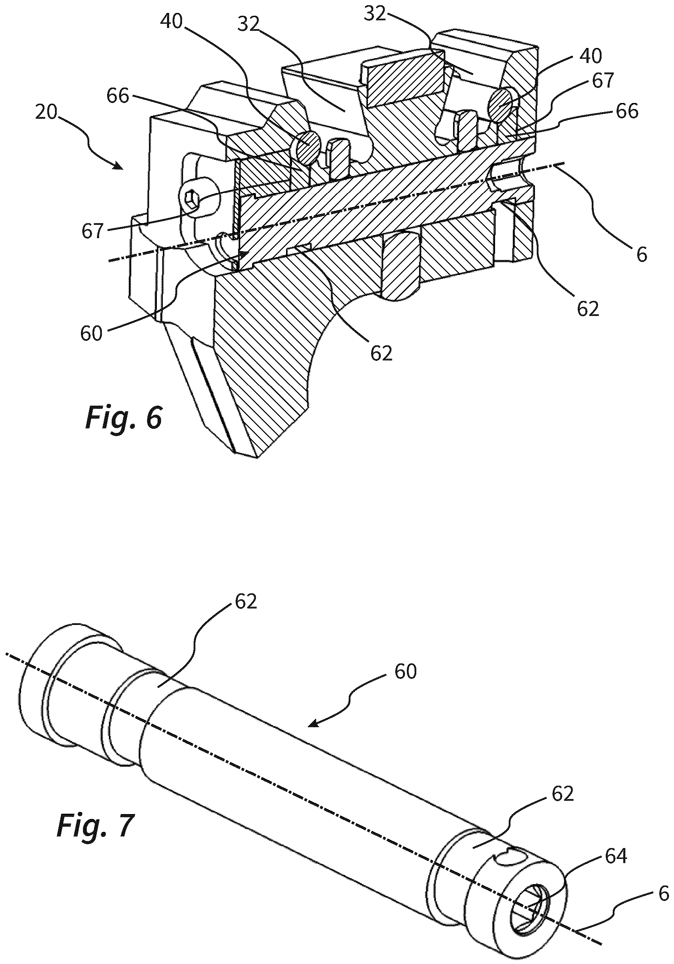

Die Fig. 6 und 7 verdeutlichen den Aufbau der Steuerwelle 60 sowie ihr Funktionsweise. Wie in Fig. 7 zu ersehen, verfügt die Steuerwelle 60 über zwei Exzenterbereiche 62, im Bereich derer die Außenfläche der Steuerwelle 60 nicht äquidistant zur Drehachse 6 der Steuerwelle ausgebildet ist, sondern eine demgegenüber exzentrisch angeordnete Ringfläche bilden.

Wie anhand der Fig. 6 zu erkennen ist, sind die beiden Exzenterbereiche 62 jeweils im Bereich von Durchbrechungen 67 angeordnet, die den Bereich der Steuerwelle 60 mit den Aufnahmeräumen 36 für die Arretierungskörper 40 verbinden. Innerhalb dieser Durchbrechungen 67 ist jeweils ein Zwischenglied 66 angeordnet, dessen zum Arretierungskörper 40 weisendes Ende mit einer schräggestellten Stirnfläche versehen ist.

Wird die Steuerwelle 60 über die Betätigungsstruktur 64 gedreht, so bewirkt dies aufgrund der exzentrischen Formgebung in den Exzenterbereichen 62, dass die Zwischenglieder 66 in den Durchbrechungen 67 bezogen auf Fig. 6 nach oben gedrückt werden und somit weiter in die Aufnahmeräume 36 einrücken. Dies führt aufgrund der schräggestellten Stirnflächen der Zwischenglieder 66 dazu, dass die Arretierungskörper in Richtung des Aufnahmeschachtes verschoben werden bzw. in dieser Lage gesichert werden. Jener Arretierungskörper 40, der in der Arretierungsausnehmung 86 des Kopplungsfortsatzes 82 der Aufsatzbacke 70 eingerückt ist, verhindert dadurch, dass die Aufsatzbacke 70 entnommen werden kann. Eine Kraftbeaufschlagung der Aufsatzbacke 70 in Entkoppelungsrichtung führt nicht zu einer Trennung, da das Zwischenglied 66 aufgrund der Drehstellung der Steuerwelle 60 nicht ausweichen kann.

Soll die Aufsatzbacke 70 getauscht werden, so wird über die Betätigungsstruktur 64 die Steuerwelle 60 gedreht, vorliegend um etwa 135°. Die Zwischenglieder 66 können dadurch wieder partiell aus den Aufnahmeräumen 36 herausgleiten und gestatten daher nun wieder die Verlagerung des Arretierungskörpers 40 in Richtung seiner Freigabestellung und damit die Trennung der Aufsatzbacke 70 von der Grundbacke 20. Nach Aufsetzen einer anderen Aufsatzbacke 70 oder Wechsel der Orientierung der Aufsatzbacke 70 wird durch nochmaliges Drehen der Steuerwelle 60 wieder der arretierte Zustand hergestellt.

## Patentansprüche

1. Spannbacke (10) für ein Spannbackensystem (100) zum Spannen eines Werkstücks mit den folgenden Merkmalen:
a. die Spannbacke (10) weist eine Grundbacke (20) und eine hierauf in einer Kopplungsrichtung (4) aufsetzbare Aufsatzbacke (70) auf, wobei die Grundbacke (20) und die Aufsatzbacke (70) zur gemeinsamen Verlagerung in einer Zustellrichtung (2) im Zuge des Spannens und Entspannens eines Werkstücks vorgesehen sind, und
b. die Aufsatzbacke (70) verfügt über eine Spannfläche (72) zur Anlage an einem Werkstück, und
c. die Grundbacke (20) weist auf einer Oberseite (26) eine Kontaktfläche (30) auf und die Aufsatzbacke (70) weist an einer Unterseite (76) eine korrespondierende Kontaktfläche (80) zur flächigen Anlage an der Oberseite (26) der Grundbacke (20) auf, und
c. zur Arretierung der Aufsatzbacke (70) an der Grundbacke (20) weist die Aufsatzbacke (70) an ihrer Unterseite (76) eine Arretierungsausnehmung (86) auf, die durch eine Vertiefung querzur Kopplungsrichtung (4) gebildet wird, und
d. die Grundbacke (20) weist einen Aufnahmeraum (36) und einen innerhalb des Aufnahmeraums beweglichen Arretierungskörper (40) auf, derzwischen einer Freigabestellung und einer Arretierstellung beweglich im Aufnahmeraum (36) aufgenommen ist, wobei der Arretierungskörper (40) bei aufgesetzter Aufsatzbacke (70) in der Arretierstellung in die Arretierungsausnehmung (86) eingerückt ist, und
e. in der Grundbacke (20) ist eine Steuerwelle (60) gelagert, an der drehstarr mindestens ein Exzenterbereich (62) vorgesehen ist, und
f. der Exzenterbereich (62) wirkt bei einer Drehbewegung der Steuerwelle (60) mittelbaroder unmittelbar auf den Arretierungskörper (40) und drückt den Arretierungskörper (40) dadurch in die Arretierstellung in der Arretierungsausnehmung (86), so dass die Aufsatzbacke (70) hierdurch gegen Trennung von der Grundbacke (20) gesichert ist.

2. Spannbacke (10) nach Anspruch 1 mit den folgenden zusätzlichen Merkmalen:
a. die Grundbacke (20) weist an ihrer Oberseite (26) einen Aufnahmeschacht (32) auf, an den der Aufnahmeraum (36) des Arretierungskörpers (40) angrenzt, und
b. die Aufsatzbacke (70) weist einen Kopplungsfortsatz (82) auf, der bei aufgesetzter Aufsatzbacke (70) im Aufnahmeschacht (32) der Grundbacke (20) angeordnet ist, und
c. die Arretierungsausnehmung (86) der Aufsatzbacke (70) ist am Kopplungsfortsatz (82) vorgesehen.

3. Spannbacke (10) nach Anspruch 2 mit dem folgenden zusätzlichen Merkmal:
a. der Aufnahmeschacht (32) und der Aufnahmeraum (36) des Arretierungskörpers (40) sind durch eine Verengung voneinander getrennt, durch die der Arretierungskörper (40) als Ganzes nicht hindurchpasst.

4. Spannbacke (10) nach einem der vorstehenden Ansprüche mit den folgenden zusätzlichen Merkmalen:
a. der Aufnahmeschacht (32) und der Kopplungsfortsatz (82) definieren die Kopplungsrichtung (4), und
b. die Kopplungsrichtung (4) schließt mit der Zustellrichtung (2) einen Winkel ungleich 90° ein, vorzugweise einen Winkel zwischen 60° und 80°.

5. Spannbacke (10) nach einem der vorstehenden Ansprüche mit den folgenden zusätzlichen Merkmalen:
a. der Aufnahmeschacht (32) weist an einer dem Aufnahmeraum (36) des Arretierungskörpers (40) gegenüberliegenden Seite eine Anlagefläche (33) für den Kopplungsfortsatz (82) der Aufsatzbacke (70) auf, und
b. die Anlagefläche (33) schließt mit der Kontaktfläche (30) an der Oberseite (26) der Grundbacke (20) einen Winkel < 90° ein, vorzugweise einen Winkel zwischen 60° und 85°.

6. Spannbacke (10) nach einem der vorstehenden Ansprüche mit dem folgenden zusätzlichen Merkmal:
a. eine Drehachse (6) der Steuerwelle (60) erstreckt sich parallel zur Zustellrichtung (2) der Spannbacke (10).

7. Spannbacke (10) nach einem der vorstehenden Ansprüche mit dem folgenden zusätzlichen Merkmal:
a. die Grundbacke (20) verfügt über ein Zwischenglied (66), welches am Exzenterbereich (62) der Steuerwelle (60) sowie am Arretierungskörper (40) anliegt und mittels dessen die Steuerwelle (60) den Arretierungskörper (40) in die Arretierungsstellung und damit in die Arretierungsausnehmung (86) der Aufsatzbacke (70) drückt,
vorzugsweise mit mindestens einem der folgenden zusätzlichen Merkmale:
b. das Zwischenglied (66) ist als verschiebliches Zwischenglied (66) ausbildet, welches in einer Durchbrechung (67) der Grundbacke (20) geführt ist, und/oder
c. das Zwischenglied (66) ist in einer Verlagerungsrichtung verlagerbar, die mit der Drehachse (6) der Steuerwelle (60) einen Winkel von 90° einschließt.

8. Spannbacke (10) nach einem der vorstehenden Ansprüche mit den folgenden zusätzlichen Merkmalen:
a. der Arretierungskörper (40) weist eine zumindest abschnittsweise kreiszylindrische Formgebung auf, und
b. eine Mittelachse des Arretierungskörpers (40) ist orthogonal zur Kopplungsrichtung (4) ausgerichtet.

9. Spannbacke (10) nach einem der vorstehenden Ansprüche mit dem folgenden zusätzlichen Merkmal:
a. es ist mindestens eine Federeinrichtung (38) vorgesehen, mittels derer der Arretierungskörper (40) in Richtung der Arretierstellung gedrückt wird.

10. Spannbacke (10) nach einem der vorstehenden Ansprüche mit dem folgenden zusätzlichen Merkmal:
a. die Grundbacke (20) weist zwei Arretierungskörper (40) auf, die jeweils mittelbar oder unmittelbar durch die Steuerwelle (60) in Richtung der Arretierstellung gedrückt wird.

11. Spannbacke (10) nach Anspruch 10 mit dem folgenden zusätzlichen Merkmal:
a. die Aufsatzbacke (70) kann in zwei einander entgegengesetzten Orientierungen an der Grundbacke (20) gesichert werden, wobei in einer ersten Orientierung ein erster Arretierungskörper (40) die Aufsatzbacke sichert und in einerzweiten Orientierung ein zweiter Arretierungskörper (40) die Aufsatzbacke (70) sichert.

12. Spannbacke (10) nach Anspruch 10 oder 11 mit den folgenden zusätzlichen Merkmalen:
a. die Grundbacke (20) weist an ihrer Oberseite (26) zwei Aufnahmeschächte (32) zur Aufnahme eines Kopplungsfortsatzes (82) einer Aufsatzbacke (70) auf, und
b. die zwei Arretierungskörper (40) sind jeweils in einem sich an einen der Aufnahmeschächte (32) angrenzende Aufnahmeraum (36) angeordnet.

13. Spannbacke (10) nach einem der vorstehenden Ansprüche mit dem folgenden zusätzlichen Merkmal:
a. die Steuerwelle (60) weist an einem Stirnende eine unrunde Betätigungsstruktur (64) auf, insbesondere in Form eines Vierkants oder eines Sechskants.

14. Spannbacke (10) nach einem der vorstehenden Ansprüche mit dem folgenden zusätzlichen Merkmal:
a. der mindestens eine Aufnahmeschacht (32) ist in Richtung der Oberseite (26) der Grundbacke sowie an einander gegenüberliegenden Seitenflächen (28) der Grundbacke (20) offen ausgebildet.

15. Spannbackensystem (100) zum Einspannen von Werkstücken mit den folgenden Merkmalen:
a. das Spannbackensystem (100) weist einen Futterkörper (110) auf, und
b. das Spannbackensystem (100) weist eine Mehrzahl von gegenüber dem Futterkörper beweglichen und radial zustellbaren Spannbacken (10) auf,
**gekennzeichnet durch** das folgende zusätzliche Merkmal:
c. die Spannbacken (10) sind nach einem der vorstehenden Ansprüche ausgebildet.
